# EUROPEAN PATENT APPLICATION

(11) **EP 1 876 794 A1**
(43) Date of publication of application: **09.01.2008**
(21) Application number: 07107113.8
(22) Date of filing: 27.04.2007
(51) Int. Cl.: H04L 29/06, H04M 7/00, H04N 1/00

(54) **Image forming device with internet telephony feature and method thereof**

(30) Priority: 07.07.2006 KR 20060064107
(71) Applicant: Samsung Electronics Co., Ltd., Suwon-si 442-742 Gyeonggi-do (KR)
(72) Inventor: KARDASHYAN, Ara, Gyeonggi-do (KR)
(74) Representative: Perkins, Dawn Elizabeth

(57) **Abstract**

An image forming device that supports a Voice over Internet Protocol (VoIP) call function, the image forming device including an interface (110) that communicates with external devices, the external devices including a VoIP call recipient's communication device; and a controller (120) that converts voice data received through the interface of the image forming device into data packets, and transmits the data packets to the VoIP call recipient's communication device through the interface of the image forming device.

## Description

An aspect of the invention relates to an image forming device that supports a Voice over Internet Protocol (VoIP) function, and a calling method thereof. More particularly, an aspect of the invention relates to an image forming device that supports a VoIP function by converting voice data received from a wired telephone or a wireless telephone into packets in accordance with a certain standard and transmitting the packets to a destination communication device, and a calling method thereof.

As computer technology develops, computer peripherals, especially, image forming devices, are being provided with an increasing range of functions. Image forming devices are devices that form images on paper or a screen, such as a printer, a scanner, a photocopier, or a facsimile machine. Recently, multifunction devices combining various functions of various image forming devices have been developed and used.

Additionally, network communication technology, such as the Internet, is also developing together with computer technology. Consequently, various communication methods using the Internet are developing. Among these is Internet telephony, that is, VoIP telephony. Internet telephones are achieving widespread use among the public due to their low cost.

However, a host device such as a computer is needed to use such an Internet telephone. Accordingly, a method for using an Internet telephone in an environment without a computer would be desirable.

Aspects of the invention are at least to solve the above problems and/or other disadvantages and to provide at least the features and/or advantages described below. Accordingly, an aspect of the invention is to provide an image forming device that enables a user to use an inexpensive Internet telephone without a separate host device such as a computer by supporting a VoIP function, and a calling method thereof.

According to an aspect of the invention, there is provided an image forming device that supports a Voice over Internet Protocol (VoIP) call function, the image device including an interface that communicates with external devices, the external devices including a VoIP call recipient's communication device; and a controller that converts voice data received through the interface of the image forming device into data packets, and transmits the data packets to the VoIP call recipient's communication device through the interface of the image forming device.

According to an aspect of the invention, the interface includes a modem that receives the voice data from one of the external devices; and a network card that transmits the packets to the VoIP call recipient's communication device.

According to an aspect of the invention, the controller monitors whether a ring signal is received through the modem, and if the ring signal is received, the controller determines a type of a call being made based on whether the ring signal includes a predetermined identification symbol received during a predetermined period of time after the ring signal is first received.

According to an aspect of the invention, if the ring signal includes the predetermined identification symbol received during the predetermined period of time, the controller determines the type of the call being made to be a VoIP call, converts the voice data received through the modem into the data packets, and transmits the data packets to the VoIP call recipient's communication device.

According to an aspect of the invention, the device further includes a storage that stores a telephone number of the VoIP call recipient in association with an Internet Protocol (IP) address of the VoIP call recipient's communication device; wherein if the ring signal includes the predetermined identification symbol received during the predetermined period of time, the ring signal further includes the VoIP call recipient's telephone number; and wherein the controller reads the IP address of the call recipient's communication device from the storage in response to the VoIP call recipient's telephone number included in the ring signal, and transmits the data packets to the IP address of the VoIP call recipient's communication device.

According to an aspect of the invention, the device further includes an image forming unit that forms an image; wherein if the ring signal does not include the predetermined identification symbol received during the predetermined period of time, the controller determines the type of the call being made to be a fax call, and operates the image forming unit to form an image corresponding to fax data received through the modem.

According to an aspect of the invention, if data packets are received through the network card, the controller converts the data packets received through the network card into voice data, operates the modem to establish a call connection with a telephone of a user of the image forming device, and transmits the voice data converted from the data packets received through the network card to the user's telephone through the call connection.

According to an aspect of the invention, the controller converts the voice data into the data packets and transmits the data packets according to the H.323 standard established by the International Telecommunication Union Telecommunication Standardization Sector (ITU-T).

According to another aspect of the invention, there is provided an image forming device including an interface that communicates with external devices; and a controller that determines whether a ring signal received through the interface of the image forming device includes a predetermined identification symbol received during a predetermined period of time after the ring signal is first received, and selectively performs a Voice over Internet Protocol (VoIP) call function or a fax function based on whether the ring signal includes the predetermined identification symbol received during the predetermined period of time.

According to an aspect of the invention, the external devices include a VoIP call recipient's communication device; and if the ring signal includes the predetermined identification symbol received during the predetermined period of time, the controller performs the VoIP call function by converting voice data received through the interface into data packets, and transmitting the data packets to the VoIP call recipient's communication device.

According to an aspect of the invention, the external devices include a VoIP call recipient's communication device; the device further includes a storage that stores a telephone number of the VoIP call recipient in association with an IP address of the VoIP call recipient's communication device; if the ring signal includes the predetermined identification symbol received during the predetermined period of time, the ring signal further includes the VoIP call recipient's telephone number; and the controller reads the IP address of the VoIP call recipient's communication device from the storage in response to the VoIP call recipient's telephone number included in the ring signal, and performs the VoIP call function using the IP address of the VoIP call recipient's communication device.

According to an aspect of the invention, the device further includes an image forming unit that forms an image; wherein if the ring signal does not include the predetermined identification symbol received during the predetermined period of time, the controller performs a fax function by operating the image forming unit to form an image corresponding to fax data received through the interface.

According to an aspect of the invention, if data packets are received through the interface, the controller converts the data packets received through the interface into voice data, controls the interface to establish a call connection with a telephone of a user of the image forming device, and transmits the voice data converted through the data packets received through the interface to the user's telephone through the call connection.

According to an aspect of the invention, the controller performs the VoIP call function according to the H.323 standard established by the International Telecommunication Union Telecommunication Standardization Sector (ITU-T).

According to another aspect of the invention, there is provided a Voice over Internet Protocol (VoIP) calling method performed using an image forming device, the image forming device including a modem and a network card, the method including receiving voice data through the modem of the image forming device; converting the voice data into data packets; and transmitting the data packets to a VoIP call recipient's communication device through the network card of the image forming device.

According to an aspect of the invention, the method further includes monitoring whether a ring signal is received through the modem; if the ring signal is received, determining whether the ring signal includes a predetermined identification symbol received during a predetermined period of time after the ring signal is first received; and performing the receiving of the voice data, the converting of the voice data, and the transmitting of the data packets if the ring signal includes the predetermined identification symbol received during the predetermined period of time.

According to an aspect of the invention, the image forming device further includes a storage that stores a telephone number of the VoIP call recipient in association with an Internet Protocol (IP) address of the VoIP call recipient's communication device; wherein if the ring signal includes the predetermined identification symbol received during the predetermined period of time, the ring signal further includes the telephone number of the VoIP call recipient; wherein the method further includes reading the IP address of the VoIP call recipient's communication device from the storage in response to the VoIP call recipient's telephone number included in the ring signal; and wherein the transmitting of the data packets includes transmitting the data packets to the IP address of the VoIP call recipient's communication device.

According to an aspect of the invention, the image forming device further includes an image forming unit; and the method further includes performing a fax function by operating the image forming unit to form an image corresponding to fax data received through the modem if the ring signal does not include the predetermined identification symbol received during the predetermined period of time.

According to an aspect of the invention, the converting of the voice data and the transmitting of the data packets are performed according to the H.323 standard established by the International Telecommunication Union Telecommunication Standardization Sector (ITU-T).

According to another aspect of the invention, there is provided a Voice over Internet Protocol (VoIP) calling method performed using an image forming device, the method including monitoring whether a ring signal is received by the image forming device; if the ring signal is received, determining whether the ring signal includes a predetermined identification symbol received during a predetermined period of time after the ring signal is first received; and selectively performing a VoIP call function or a fax function using the image forming device based on whether the ring signal includes the predetermined identification symbol received during the predetermined period of time.

According to an aspect of the invention, the image forming device includes a modem and a network card; wherein if the ring signal includes the predetermined identification symbol received during the predetermined period of time, the selective performing of the VoIP call function or the fax function includes performing the VoIP call function by converting voice data received through the modem of the image forming device into data packets, and transmitting the data packets to a VoIP call recipient's communication device through the network card of the image forming device.

According to an aspect of the invention, the image forming device includes a storage that stores a telephone number of a VoIP call recipient in association with an Internet Protocol (IP) address of a communication device of the VoIP call recipient; wherein if the ring signal includes the predetermined identification symbol received during the predetermined period of time, the ring signal further includes the VoIP call recipient's telephone number, and the selective performing of the VoIP call function or the fax function includes performing the VoIP call function by reading the IP address of the VoIP call recipient's communication device from the storage of the image forming device in response to the VoIP call recipient's telephone number included in the ring signal, and transmitting the data packets to the IP address of the VoIP call recipient's communication device.

According to an aspect of the invention, the image forming device includes a modem and an image forming unit; wherein if the ring signal does not include the predetermined identification symbol received during the predetermined period of time, the selective performing of the VoIP call function or the fax function includes performing the fax function by operating the image forming unit of the image forming device to form an image corresponding to fax data received through the modem of the image forming device.

According to an aspect of the invention, the VoIP call function is performed according to the H.323 standard established by the International Telecommunication Union Telecommunication Standardization Sector (ITU-T).

According to another aspect of the invention, there is provided an image forming device including an image forming unit; and central processing unit (CPU) logic that selectively controls the image forming unit to form an image, and performs a Voice over Internet Protocol (VoIP) call function without requiring a separate host device to perform the VoIP call function.

Additional aspects and/or advantages of the invention will be set forth in part in the description that follows and, in part, will be obvious from the description, or may be learned by practice of the invention.

The above and/or other aspects and advantages of the invention will become apparent and more readily appreciated from the following description of embodiments of the invention, taken in conjunction with the accompanying drawings of which:
Figure 1 is a block diagram of a portion of an image forming device according to an aspect of the invention;
Figure 2 is a diagram of a call connection process using the image forming device of Figure 1;
Figure 3 is a detailed block diagram of the image forming device of Figure 1;
Figure 4 is a flow chart of a VoIP calling method of an image forming device according to an aspect of the invention; and
Figure 5 is a detailed flow chart of the calling method of Figure 4.

Reference will now be made in detail to embodiments of the invention, examples of which are shown in the accompanying drawings, wherein like reference numerals refer to like elements throughout. The embodiments are described below in order to explain the invention by referring to the figures.

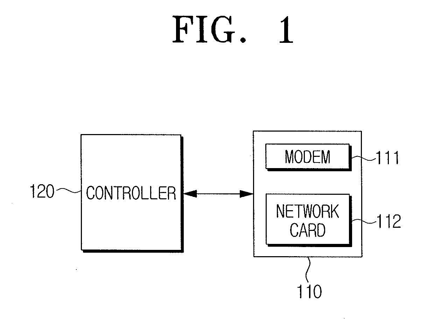

Figure 1 is a block diagram of a portion of an image forming device according to an embodiment of the invention. The image forming device can be implemented with, for example, a printer, a scanner, a photocopier, a facsimile machine, or a multifunction device.

Referring to Figure 1, the image forming device includes an interface 110 and a controller 120. The interface 110 communicates with external devices. In detail, the interface 110 includes a modem 111 and a network card 112.

The modem 111 communicates with external telephone offices and base stations through a PSTN network. Accordingly, the modem 111 can transmit voice data to and receive voice data from external telephones.

The network card 112 transmits packets to and receives packets from destination devices through a network such as a local area network (LAN). In detail, the network card 112 can perform communication according to any suitable communication standard such as the 802.11 wireless communication standard.

The controller 120 converts voice data received from an external telephone through the interface 110 into packets and transmits the packets to a destination device through the interface 110. That is, the controller 120 converts voice data transmitted from the external telephone through the modem 111 into packets, and transmits the packets through the network card 112 to the destination device. Accordingly, the image forming device can perform a VoIP function.

More specifically, the controller 120 can support a VoIP function according to the H.323 standard established by the International Telecommunication Union Telecommunication Standardization Sector (ITU-T). The H.323 standard was originally established to provide a mechanism for providing multimedia services over the Internet, but has evolved to cover VoIP as well. The H.323 standard was first established in 1996 and has now reached version 6 which was approved in June 2006. The controller 120 can transmit packets to the destination device through a gateway (not shown) using the H.323 standard.

Additionally, the controller 120 can provide various supplementary services using the H.450-x set of standards established by the ITU-T. In more detail, a Call Transfer Supplementary Service (ITU-T Recommendation H.450-2), a Call Diversion Supplementary Service (ITU-T Recommendation H.450-3), a Call Hold Supplementary Service (ITU-T Recommendation H.450.4), and a Call Park and Pickup Supplementary Service (ITU-T Recommendation H.450-5) can be provided. However, the invention is not limited to these supplementary services, and other supplementary services described in the H.450-x set of standards may also be provided.

Moreover, the controller 120 can compress or decompress voice data according to the G.711 and G.729 standards. G.711 and G.729 are ITU-T standards for voice codecs that provide long distance call quality audio. Since the process of conversion between voice data and packets is described in detail in the standards, a detailed description will be omitted here.

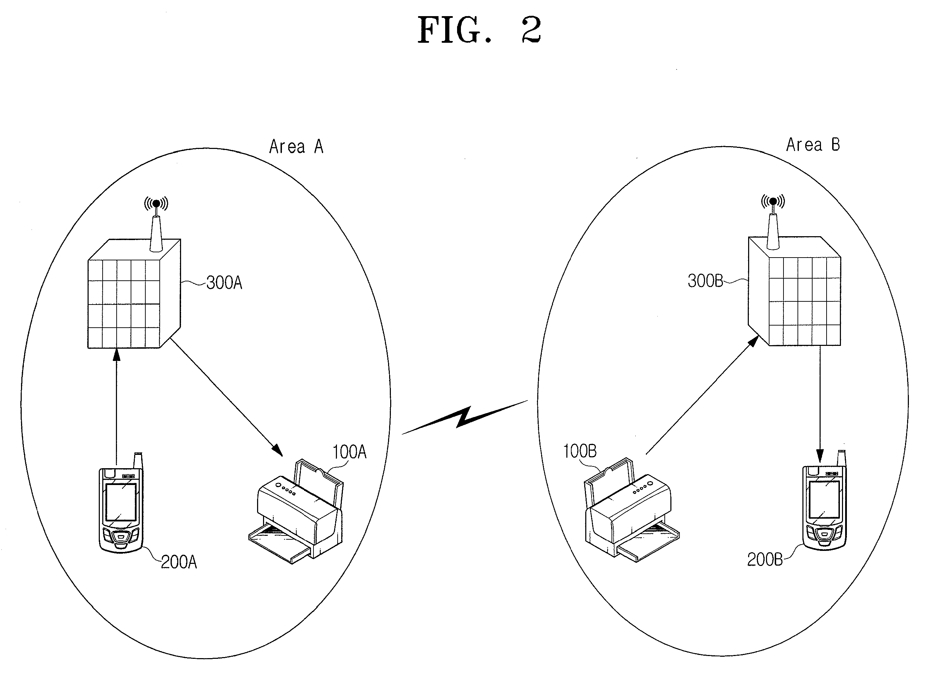

Figure 2 is a diagram of a call connection process using the image forming device of Figure 1. Figure 2 shows the process of connecting a call from a user in an area A to a user in an area B. In Figure 2, a first image forming device 100A and a second image forming device 100B can have the configuration shown in Figure 1, and each telephone 200A and 200B can be implemented with a wired telephone or a wireless telephone, that is, a cell telephone.

In Figure 2, a user who wants to make a call to the telephone 200B calls the first image forming device 100A using the telephone 200A. In detail, the user inputs into the telephone 200A the telephone number of the first image forming device 100A, an identification symbol, and the telephone number of the destination telephone 200B, i.e., the telephone number of a person the user wants to call. The identification symbol informs the first image forming device 100A that the call is a voice call, and may be a symbol such as "#", "*", and so forth.

When the user inputs the telephone number of the first image forming device 100A into the telephone 200A, a call connection base station 300A transmits a ring signal including the identification symbol and the telephone number of the destination telephone 200B to the first image forming device 100A. The first image forming device 100A recognizes from the identification symbol included in the ring signal that a voice call connection is being attempted, so the first image forming device 100A converts the voice data transmitted from the call connection base station 300A into packets and transmits the packets to the second image forming device 100B in the area B through a gateway (not shown).

The second image forming device 100B connects the voice call to the destination telephone 200B via a call connection base station 300B, converts the packets transmitted from the first image forming device 100A into voice data, and transmits the voice data to the destination telephone 200B via the connection. Accordingly, the voice call is connected between the first image forming device 100A and the second image forming device 100B.

An example of the process of call connection shown in Figure 2 is as follows. A user in Seoul (that is, area A) makes a voice call to a counterpart's cell telephone (010-YYY-YYYY) in Korea (for which the country code is 82). First, the user inputs the telephone number of the first image forming device 100A into his telephone 200A. That is, if the telephone number of the first image forming device 100A is "02-XXX-XXXX", the user inputs the telephone number "02-XXX-XXXX", the identification symbol "#", and the counterpart's telephone number "82-10-YYY-YYYY" in that order. The first image forming device 100A automatically detects the IP address of the counterpart's communication device, i.e., the second image forming device 100B, corresponding to "82-10-YYY-YYYY" in accordance with the H.323 standard, and transmits the packets to that IP address. The second image forming device 100B connects the voice call to the telephone 200B having the telephone number "82-10-YYY-YYYY" via the call connection base station 300B. In this manner, the voice call connection between the user and the counterpart is completed.

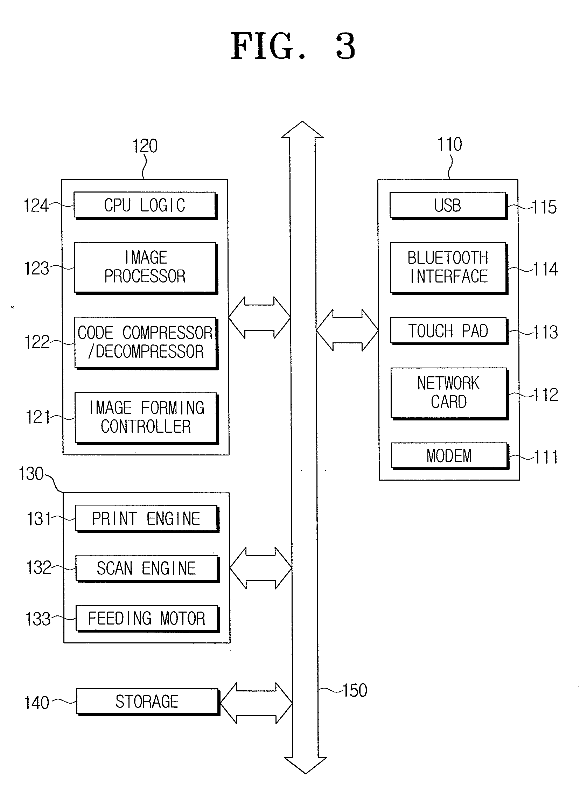

Figure 3 is a detailed block diagram of the image forming device of Figure 1. The image forming device of Figure 3 includes an interface 110, a controller 120, an image forming unit 130, a storage 140, and a data bus 150.

The interface 110 includes a modem 111, a network card 112, a touch pad 113, a Bluetooth interface 114, and a universal serial bus (USB) 115. The touch pad 113 is formed on a main body of the image forming device to receive various commands selected by a user. The Bluetooth interface 114 is an interface that performs Bluetooth communication with a master node or a slave node. The USB 115 is an interface that transmits data to and receives data from an external device connected via a USB port. The interface 110 can include additional interfaces, or can omit one or more of the interfaces shown in Figure 3.

The controller 120 includes an image forming controller 121, a code compressor/decompressor 122, an image processor 123, and central processing unit (CPU) logic 124.

The image forming controller 121 operates various units in the image forming unit 130 to implement an image forming process. The code compressor/decompressor 122 compresses voice data to convert the voice data into packets, or decompresses packets to convert the packets into voice data. The compression/decompression can be performed according to the G.711 standard and/or the G.729 standard, or any other suitable standard. The image processor 123 performs image processing to convert print data into a bitmap image for printing. The CPU logic 124 executes a VoIP program to execute conversion between voice data and packets, and consequently performs the Internet telephone function.

The image forming unit 130 directly forms an image using units such as a print engine 131, a scan engine 132, and a feeding motor 133. The print engine 131 prints the bitmap image produced by the image processor 123 on paper. The scan engine 132 scans a document to generate a data file. The feeding motor 133 supplies paper or a document to the print engine 131 or the scan engine 132. Since the above configuration of the image forming unit 130 can be implemented in the same manner as in an existing image forming device, a detailed description will be omitted here.

The storage 140 stores telephone codes and Internet Protocol (IP) addresses of counterparts' devices. That is, the storage 140 stores IP addresses for each country code (such as 82 for Korea) and each area code (such as 02 for Seoul).

The data bus 150 transfers data between each of the other components in Figure 3.

Hereinafter, the operation of the image forming device will be explained with reference to Figure 3.

The modem 111 can receive a ring signal from a call connection base station. The CPU logic 124 of the controller 120 continuously monitors whether or not a ring signal is received. If a ring signal is received, the CPU logic 124 checks whether or not an identification symbol has been input within a certain period of time after the ring signal is first received. Whether or not an identification symbol has been input determines the type of call.

More specifically, if the identification symbol "#" is received within 5 seconds after the ring signal is first received, the type of call is determined to be a voice call. Subsequently, the VoIP program is executed to perform the VoIP function. The VoIP function can be performed according to the H.323 standard.

The CPU logic 124 detects the counterpart's telephone number included in the ring signal, and reads the IP address corresponding to the counterpart's telephone number from the storage 140. More specifically, the CPU logic 124 checks the corresponding area or the corresponding telephone type (i.e., a landline telephone or a cell telephone) by checking the telephone code in the prefix of the counterpart's telephone number, and reads the IP address corresponding to the telephone code from the storage 140. Then, the CPU logic 124 controls the network card 112 to transmit packets to that IP address.

The CPU logic 124 can detect the identification symbol and the counterpart's telephone number from the ring signal in using a dual-tone multi-frequency (DTMF) method. The DTMF method is a signal generating method developed by Bell Laboratories to transmit telephone dialing information via analog voice quality telephone lines that transmit voice signals. Since this method is well known, a detailed description will be omitted here.

If the CPU logic 124 confirms that there no identification symbol has been input within a certain period of time after the ring signal is first received, the CPU logic 124 determines the type of call to be a fax call and notifies the image forming controller 121. The image forming controller 121 forms a fax image by operating the image forming unit 130. A fax receiving function is normally performed in such a manner.

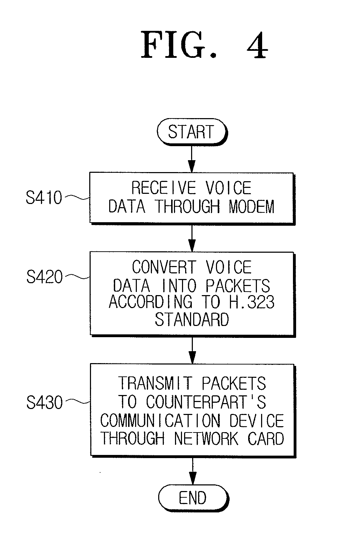

Figure 4 is a flow chart of a VoIP calling method of an image forming device according to an aspect of the invention based on the image forming device including a modem and a network card shown in Figures 1 and 3. Referring to Figure 4, when voice data is received through the modem (block S410), the voice data is converted into packets according to the H.323 standard (block S420). Subsequently, the packets are transmitted to the counterpart's communication device (block S430), so that the call is connected to the counterpart's telephone.

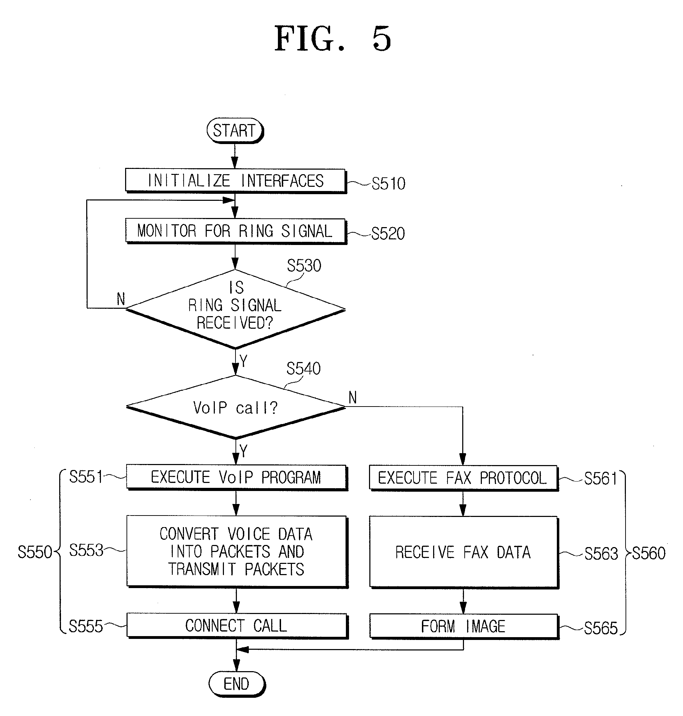

Figure 5 is a detailed flow chart of the calling method of Figure 4.

In Figure 5, when various interfaces, such as a modem and a network card, are in the initialized state (block S510), the image forming device examines the state of the central office (CO) line to monitor whether or not a ring signal is received (block S520). The CO line is a connection line between a telephone office and a telephone in a home or small office without a private branch exchange.

If it is confirmed that a ring signal is received (block S530), the controller checks whether the call is a VoIP call or a fax call (block S540). In this case, the call type can be determined according to whether or not an identification symbol is included in the ring signal, and a VoIP call function or a fax function is selectively performed according to the results of the determination of the type of call.

The controller checks whether an identification symbol is included in the ring signal for a certain period of time after the ring signal is first received. If the identification symbol is included, the call is determined to be a VoIP call, and if the identification symbol is not included, the call is determined to be a fax call.

If the call is determined to be a VoIP call, voice data received through the modem is converted into packets and transmitted to the counterpart's communication device, so that an Internet telephone connection is established between the user's telephone and the counterpart's telephone (process S550). More specifically, if the call is determined to be a VoIP call, a VoIP program is first executed block (S551). The VoIP program performs conversion between voice data and packets according to the H.323, H.450, G.711, and G.729 standards established by the ITU-T.

Accordingly, the voice data received through the modem is converted into packets and transmitted to the counterpart's communication device (block S553). In this case, the IP address of the counterpart's communication device can be read from a pre-stored database. The image forming device can have a memory storing the pre-stored database. The database includes the IP address corresponding to the counterpart's telephone number, that is, the telephone code. The database includes the IP address of the counterpart's communication device (e.g., an image forming device) located in a certain area according to the telephone exchange number or area code. The image forming device reads the IP address from the database and transmits the packets to the IP address, and the counterpart's communication device connects the call to the counterpart's telephone number so that the call can begin (block S555). The call is maintained until on-hook occurs. If on-hook occurs, the process shown Figure 5 ends and then is restarted so that the interfaces are initialized (block S510), and whether a ring signal is received is monitored (blocks 520 and 530) until a ring signal is received.

If the call is not determined to be a VoIP call, that is, if an identification symbol is not included in the ring signal, the call is determined to be a fax call, and a fax receiving operation is performed (process S560).

That is, a fax protocol is executed (block S561) so that fax data received through the modem is printed onto paper (blocks S563 and S565). Since such a fax receiving operation is the same as a conventional fax receiving operation, a detailed description will be omitted here.

In a similar manner as described above, an image forming device according to an aspect of the invention can also receive packets from a counterpart's image forming device, convert the packets into voice data, and connect the voice data to the user's telephone to connect a call with the counterpart's telephone.

As can be appreciated from the above description, a VoIP call can be performed using an image forming device according to an aspect of the invention. As a result, user convenience is increased by permitting inexpensive Internet call without requiring a separate host device such as a computer.

Although several embodiments of the invention have been shown and described, it would be appreciated by those skilled in the art that changes may be made in these embodiments without departing from the scope of the invention as defined in the claims.

## Claims

1. An image forming device that supports a Voice over Internet Protocol (VoIP) call function, the image forming device comprising:
an interface (110) configured to communicate with external devices; and
a controller (120) configured to convert voice data received through the interface (110) into data packets, and transmit the data packets to at least one of the external devices, which comprises a VoIP call recipient's communication device.

2. The device of claim 1, wherein the interface (110) comprises:
a modem (111) configured to receive the voice data from one of the external devices; and
a network card (112) configured to transmit the data packets to the VoIP call recipient's communication device.

3. The device of claim 2, wherein the controller (120) is configured to monitor whether a ring signal is received through the modem(111), and if the ring signal is received, to determine a type of a call being made based on whether the ring signal includes a predetermined identification symbol received during a predetermined period of time after the ring signal is first received.

4. The device of claim 3, wherein the controller (120) is configured to, if the ring signal includes the predetermined identification symbol received during the predetermined period of time, determine the type of the call being made to be a VoIP call, convert the voice data received through the modem into the data packets, and transmit the data packets to the VoIP call recipient's communication device through the network card (112).

5. The device of claim 3 or 4, further comprising a storage device (140) having stored therein a telephone code of the VoIP call recipient in association with an Internet Protocol (IP) address of the VoIP call recipient's communication device;
wherein if the ring signal includes the predetermined identification symbol received during the predetermined period of time, the ring signal further includes the VoIP call recipient's telephone number; and
wherein the controller (120) is configured to read the IP address corresponding to the telephone code of the VoIP call recipient's telephone number included in the ring signal from the storage device (140), and transmit the data packets to the IP address of the VoIP call recipient's communication device.

6. The device of claim 3, 4 or 5 further comprising an image forming unit (130), wherein the controller (120) is configured to, if the ring signal does not include the predetermined identification symbol received during the predetermined period of time, determine the type of the call being made to be a fax call, and operate the image forming unit (130) to form an image corresponding to fax data received through the modem (111).

7. The device of any one of claims 2 to 6, wherein the controller (120) is configured, if data packets are received through the network card (112), to convert the data packets received through the network card (112) into voice data, operate the modem (111) to establish a call connection with a telephone corresponding to the data packets, and transmit the voice data converted from the data packets received through the network card (112) to the telephone through the call connection.

8. The device of any one of the preceding claims, wherein the controller (120) is configured to convert the voice data into the data packets and transmit the data packets according to the H.323 standard established by the International Telecommunication Union Telecommunication Standardization Sector (ITU-T).

9. The device of any one of the preceding claims, wherein the voice data received through the interface of the image forming device originates from a telephone of a user of the image forming device.

10. An image forming device comprising:
an interface (110) configured to communicate with external devices; and
a controller (120) configured to determine whether a ring signal received through the interface (110) includes a predetermined identification symbol received during a predetermined period of time after the ring signal is first received, and selectively perform a Voice over Internet Protocol (VoIP) call function or a fax function based on whether the ring signal includes the predetermined identification symbol received during the predetermined period of time.

11. The device of claim 10, wherein at least one of the external devices comprises a VoIP call recipient's communication device; and
wherein the controller (120) is configured to, if the ring signal includes the predetermined identification symbol received during the predetermined period of time, perform the VoIP call function by converting voice data received through the interface into data packets, and transmit the data packets to the VoIP call recipient's communication device.

12. The device of claim 11, wherein the voice data received through the interface (110) originates from a telephone of a user of the image forming device.

13. The device of claim 10, 11 or 12 wherein at least one of the external devices comprises a VoIP call recipient's communication device;
wherein the image forming device further comprises a storage device (140) having stored therein a telephone code of the VoIP call recipient in association with an IP address of the VoIP call recipient's communication device;
wherein, if the ring signal includes the predetermined identification symbol received during the predetermined period of time, the ring signal further includes the VoIP call recipient's telephone number, and
wherein the controller (120) is configured to read the IP address corresponding to the telephone code of the VoIP call recipient's telephone number included in the ring signal from the storage device (140), and perform the VoIP call function using the IP address of the VoIP call recipient's communication device.

14. The device of any one of claims 10 to 13, further comprising an image forming unit (130), wherein the controller (120) is configured to, if the ring signal does not include the predetermined identification symbol received during the predetermined period of time, perform a fax function by operating the image forming unit (130) to form an image corresponding to fax data received through the interface (110).

15. The device of any one of claims 10 to 14, wherein the controller (120) is configured to, if data packets are received through the interface, convert the data packets received through the interface (110) into voice data, control the interface (110) to establish a call connection with a telephone corresponding to the data packets, and transmit the voice data converted from the data packets received through the interface (110) to the telephone through the call connection.

16. The device of any one of claims 10 to 15, wherein the controller (120) is configured to perform the VoIP call function according to the H.323 standard established by the International Telecommunication Union Telecommunication Standardization Sector (ITU-T).

17. A Voice over Internet Protocol (VoIP) calling method performed using an image forming device, the image forming device comprising a modem (111) and a network card (112), the method comprising:
receiving voice data through the modem (111) of the image forming device;
converting the voice data into data packets; and
transmitting the data packets to a VoIP call recipient's communication device through the network card (112) of the image forming device.

18. The method of claim 17, further comprising:
monitoring whether a ring signal is received through the modem (111);
if the ring signal is received, determining whether the ring signal includes a predetermined identification symbol received during a predetermined period of time after the ring signal is first received; and
performing the receiving of the voice data, the converting of the voice data, and the transmitting of the data packets if the ring signal includes the predetermined identification symbol received during the predetermined period of time.

19. The method of claim 18, wherein the image forming device further comprises a storage device (140) that stores a telephone code of the VoIP call recipient in association with an Internet Protocol (IP) address of the VoIP call recipient's communication device;
wherein if the ring signal includes the predetermined identification symbol received during the predetermined period of time, the ring signal further includes the telephone number of the VoIP call recipient;
wherein the method further comprises reading the IP address corresponding to the telephone code of the VoIP call recipient's telephone number included in the ring signal from the storage device (140); and
wherein the transmitting of the data packets comprises transmitting the data packets to the IP address of the VoIP call recipient's communication device.

20. The method of claim 18 or 19, wherein the image forming device further comprises an image forming unit (130); and
wherein the method further comprises performing a fax function by operating the image forming unit (130) to form an image corresponding to fax data received through the modem (111) if the ring signal does not include the predetermined identification symbol received during the predetermined period of time.

21. The method of any one of claims 17 to 20, wherein the converting of the voice data and the transmitting of the data packets are performed according to the H.323 standard established by the International Telecommunication Union Telecommunication Standardization Sector (ITU-T).

22. The method of any one of claims 17 to 21, wherein the voice data received through the modem (111) of the image forming device originates from a telephone of a user of the image forming device.

23. A Voice over Internet Protocol (VoIP) calling method performed using an image forming device, the method comprising:
monitoring whether a ring signal is received by the image forming device;
if the ring signal is received, determining whether the ring signal includes a predetermined identification symbol received during a predetermined period of time after the ring signal is first received; and
selectively performing a VoIP call function or a fax function using the image forming device based on whether the ring signal includes the predetermined identification symbol received during the predetermined period of time.

24. The method of claim 23, wherein the image forming device comprises a modem (111) and a network card (112); and
wherein if the ring signal includes the predetermined identification symbol received during the predetermined period of time, the selective performing of the VoIP call function or the fax function comprises performing the VoIP call function by converting voice data received through the modem (111) of the image forming device into data packets, and transmitting the data packets to a VoIP call recipient's communication device through the network card (112) of the image forming device.

25. The method of claim 23 or 24, wherein the voice data received through the network card (112) of the image forming device originates from a telephone of a user of the image forming device.

26. The method of any one of claims 23 to 25, wherein the image forming device comprises a storage device (140) that stores a telephone code of a VoIP call recipient in association with an Internet Protocol (IP) address of a communication device of the VoIP call recipient; and
wherein if the ring signal includes the predetermined identification symbol received during the predetermined period of time, the ring signal further includes the VoIP call recipient's telephone number, and the selective performing of the VoIP call function or the fax function comprises performing the VoIP call function by reading the IP address corresponding to the telephone code of the VoIP call recipient's telephone number included in the ring signal from the storage, and transmitting the data packets to the IP address of the VoIP call recipient's communication device.

27. The method of any one of claims 23 to 26, wherein the image forming device comprises a modem (111) and an image forming unit (130); and
wherein if the ring signal does not include the predetermined identification symbol received during the predetermined period of time, the selective performing of the VoIP call function or the fax function comprises performing the fax function by operating the image forming unit (130) of the image forming device to form an image corresponding to fax data received through the modem of the image forming device.

28. The method of any one of claims 23 to 27, wherein the VoIP call function is performed according to the H.323 standard established by the International Telecommunication Union Telecommunication Standardization Sector (ITU-T).

29. An image forming device comprising:
an image forming unit (130); and
central processing unit (CPU) logic (124) configured to selectively control the image forming unit (130) to form an image, and perform a Voice over Internet Protocol (VoIP) call function without requiring a separate host device to perform the VoIP call function.

30. The device of claim 29, wherein the image forming device is a printer, or a scanner, or a photocopier, or a facsimile machine.

31. The device of claim 29, wherein the image forming device is a multifunction device providing functions of at least two devices selected from the group consisting of a printer, a scanner, a photocopier, and a facsimile machine.

32. The device of claim 29, further comprising an interface (110) that communicates with a first external device and a second external device;
wherein when the CPU logic (124) performs the VoIP call function, the CPU logic (124) receives voice data through the interface from the first external device, converts the voice data to data packets, and transmits the data packets through the interface (110) to the second external device.

33. The device of claim 32, wherein the first external device receives the voice data from a telephone of a VoIP call originator and transmits the voice data to the interface (110); and
wherein the second external device is a communication device of a VoIP call recipient.

34. The device of claim 32 or 33, wherein the interface comprises:
a modem (111) configured to receive the voice data from the first external device; and
a network card (112) configured to transmit the data packets to the VoIP call recipient's communication device.

35. The device of claim 32, 33 or 34, wherein the first external device is a call connection base station.

36. The device of claim 33, further comprising a storage that stores a telephone number of the VoIP call recipient in association with an Internet Protocol (IP) address of the VoIP call recipient's communication device;
wherein when the CPU logic (124) performs the VoIP call function, the CPU logic (124) receives the VoIP call recipient's telephone number through the interface, reads the VoIP call recipient's telephone number from the storage in response to the VoIP call recipient's telephone number received through the interface (110), and transmits the data packets through the interface to the IP address of the VoIP call recipient's communication device.
